(19) Europäisches Patentamt
European Patent Office
Office européen des brevets

(11) Veröffentlichungsnummer: **0 305 800**
**A2**

# (12) EUROPÄISCHE PATENTANMELDUNG

(21) Anmeldenummer: **88113244.3**

(51) Int. Cl.4: **C08F 8/30 , C08C 19/22**

(22) Anmeldetag: **16.08.88**

(30) Priorität: **29.08.87 DE 3728927**

(43) Veröffentlichungstag der Anmeldung:
**08.03.89 Patentblatt 89/10**

(84) Benannte Vertragsstaaten:
**DE FR GB IT**

(71) Anmelder: **BAYER AG**
**Konzernverwaltung RP Patentabteilung**
**D-5090 Leverkusen 1 Bayerwerk(DE)**

(72) Erfinder: **Fauss, Rudolf, Dr.**
**Rungestrasse 51**
**D-5000 Köln 80(DE)**
Erfinder: **Seidler, Mark, Dr.**
**Luetzenkirchener Strasse 340a**
**D-5090 Leverkusen 3(DE)**
Erfinder: **Witte, Josef, Dr.**

**verstorben(DE)**

## (54) Nitrilgruppenhaltige Polymere.

(57) Nitrilgruppenhaltige Polymere können aus Polymeren mit isolierten, nicht aktivierten Doppelbindungen und Blausäure in Anwesenheit von Katalysatoren der Formel

$Ni[P(OR^1)_3]_n$ (I),

in der
$R^1$ für Alkyl oder Aryl steht und
n die Zahl 3 oder 4 bedeutet,
sowie in Gegenwart von Cokatalysatoren der Formel

$AlR^2_{3-m}Hal_m$ (II),

in der
$R^2$ für Wasserstoff, Alkyl oder Cyano steht,
Hal für Chlor, Brom oder Cyano steht und
m die Zahl 0, 1, 2 oder 3 bedeutet,
sowie gegebenenfalls in Gegenwart eines Phosphits der Formel

$P(OR^1)_3$ (III),

worin $R^1$ die angegebene Bedeutung hat,
in inerten organischen Lösungsmitteln bei 40 bis 100° C hergestellt werden.

EP 0 305 800 A2

## Nitrilgruppenhaltige Polymere

Die Erfindung betrifft nitrilgruppenhaltige Polymere, die dadurch herstellbar sind, daß man Polymere mit isolierten, nicht aktivierten Doppelbindungen mit Cyanwasserstoff in Gegenwart von Katalysatoren der Formel

$Ni[P(OR^1)_3]_n$ (I),

in der
$R^1$ für Alkyl oder Aryl steht und
n die Zahl 3 oder 4 bedeutet,
und in Gegenwart von Cokatalysatoren der Formel

$AlR^2_{3-m}Hal_m$ (II),

in der
$R^2$ für Wasserstoff, Alkyl oder Cyano steht,
Hal für Chlor, Brom oder Cyano steht und
m die Zahl 0, 1, 2 oder 3 bedeutet,
und gegebenenfalls in Gegenwart eines Phosphits der Formel

$P(OR^1)_3$ (III),

in der $R^1$ die angegebene Bedeutung hat,
in inerten organischen Lösungsmitteln bei 40 bis 100 °C umsetzt und gegebenenfalls die nicht mit Cyanowasserstoff umgesetzten Doppelbindungen hydriert.

Als Alkyl seien geradkettige und verzweigte aliphatische Kohlenwasserstoffreste mit 1 - 8 C-Atomen, bevorzugt 1 -4 C-Atomen genannt, wie Methyl, Ethyl, Propyl, Isopropyl, Butyl, Isobutyl, Hexyl, Octyl.

Als Aryl seien unsubstituiertes und alkyl- bzw. arylsubstituiertes Phenyl und Naphthyl genannt.

Copolymerisate von Acrylnitril und Butadien zeichnen sich durch ihre Öl- und Benzinfestigkeit, ihre Wärmebeständigkeit sowie durch ihren hohen Abriebwiderstand aus. Auch die durch Hydrierung dieser Copolymere erhal tenen Produkte zeichnen sich durch diese Eigenschaften aus. Einen wesentlichen Einfluß hierauf hat die Nitrilgruppe.

Bisher sind Nitrilgruppen im wesentlichen nur über Acrylnitril in Kautschuk eingeführt worden. Aufgrund der aus der Polymerchemie bekannten Tatsachen läßt sich Acrylnitril aber leider nicht mit Ethylen und α-Olefinen copolymerisieren, um so zu anderen nitrilgruppenhaltigen Kautschuken zu gelangen. Aus ähnlichen Gründen konnte sich auch kein anderes nitrilgruppenhaltiges Monomer als Ausgangsstoff zur Herstellung von technischen Kautschuken durchsetzten. Es war daher wünschenswert, weitere Nitrilgruppen enthaltende Kautschuke bereitzustellen und ein breit anwendbares Verfahren zu finden, mit dessen Hilfe der Einbau von Nitrilgruppen in Kautschuke möglich ist, ohne Acrylnitril und andere nur beschränkt einsetzbare bzw. zugängliche Monomere zu verwenden.

Die erfindungsgemäß herstellbaren Polymeren unterscheiden sich grundsätzlich von denen, die durch Copolymerisation von Acrylnitril mit konjugierten Dienen bzw. durch Hydrierung solcher Produkte erhalten werden. Nitrilgruppen, welche durch Acrylnitril eingeführt werden, befinden sich naturgemäß immer an der Polymerhauptkette, wie am vereinfachten Formelschema von Butadien-Acrylnitril-Copolymeren zu sehen ist:

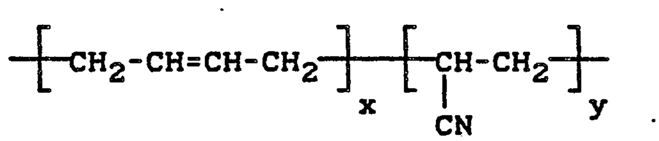

Für die erfindungsgemäße Hydrocyanierung werden Polymere eingesetzt, die einen - entsprechend ihrem Herstellungsverfahren unterschiedlich großen - Anteil an olefinischen Seitengruppen haben. Entsprechend befinden sich dann auch die eingeführten Nitrilgruppen in der Seitenkette (seltenere Ausnahmen vergl. im folgenden Formelschema). Dies ist in folgendem Formelschema am Beispiel des 1,2-Polybutadiens dargestellt, worin die Strukturen A bis D denkbare Strukturen darstellen, die in wechselnder Menge in

erfindungsgemäß herstellbaren nitrilgruppenhaltigen Polymeren auftreten können:

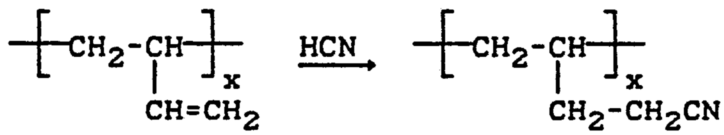


A

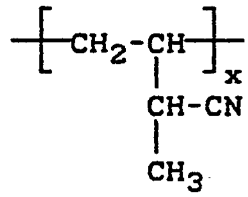

B

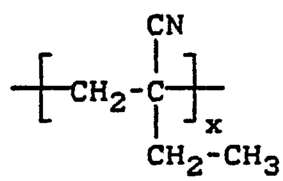

C

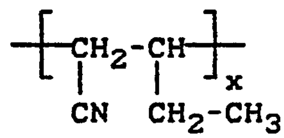

D

Die Hauptanteile entfallen auf das Strukturelement A sowie in geringerem Ausmaß auf das Strukturelement B; die Strukturelemente C und D, die durch Isomerisierung denkbar sind, sind offenbar nur im untergeordneten Maß vorhanden. Wie leicht zu ersehen ist, sind Polymere mit den Strukturelementen A bis D mangels nicht vorhandener bzw. nicht wirtschaftlich zugänglicher Monomere anders als erfindungsgemäß nicht herstellbar.

Selbst beim Einsatz von Polymeren, welche die Doppelbindungen nahezu ausschließlich in der Hauptkette tragen, entstehen erfindungsgemäß andere Produkte, als durch Copolymerisation mit Acrylnitril als Baustein erhältlich sind.

So weist auch das hydrocyanierte 1,4-Polybutadien

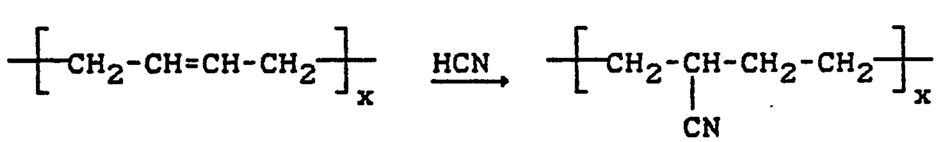


einen anderen CN-Gruppengehalt auf als die durch Hydrierung von Butadien-Acrylnitril-Copolymeren erhaltenen Kautschuke:

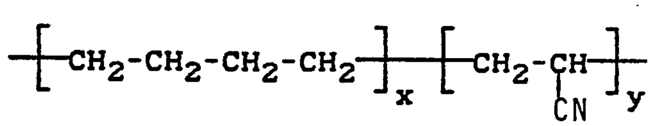

Zudem können infolge von Isomerisierungsreaktionen bei der Hydrocyanierung auch zwei CN-Gruppen

direkt benachbart sein, wie folgendes idealisierte Formelbild veranschaulicht:

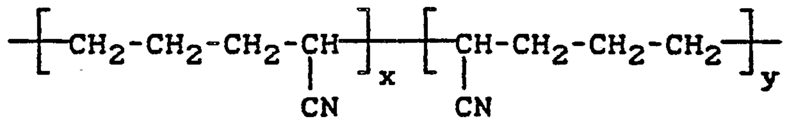

Außerdem können die in hydrierten Butadien-Acrylnitril-Kautschuken immer durch 1,2-Polymerisation des Butadiens vorhandenen Ethylseitengruppen (durch Hydrierung der Vinylseitengruppen) in den erfindungsgemäßen Polymeren nur soweit entstehen, wie solche Vinylgruppen durch Reaktion mit HCN nicht vollständig umgesetzt werden. Der Ort bzw. der Grad der erfindungsgemäßen Hydrocyanierung kann im Vergleich zum Ausgangspolymeren entweder kernresonanzspektroskopisch oder infrarotspektroskopisch ermittelt werden.

Die Hydrocyanierung von niedermolekularen Olefinen mit Nickel-[O]-Katalysatoren in Anwesenheit von Cokatalysatoren ist bekannt (Advances in Catalysis, Vol. 33 (1985), 1-46). Die Hydrocyanierung von Butadien über Pentensäurenitril zu Adipinsäuredinitril ist zum großtechnischen Verfahren entwickelt worden.

Dennoch war die Hydrocyanierung von Polymeren mit isolierten, nicht aktivierten Doppelbindungen nicht zu erwarten. Sie gelingt auch beispielsweise nicht mit dem für das technisch durchgeführte Adipinsäuredinitril-Verfahren besonders gut geeignetem Katalysatorsystem der Formel

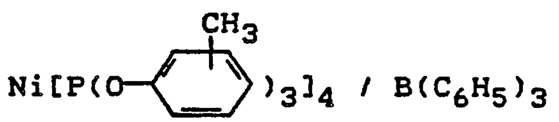 (IV).

Außerdem gibt es viele Reaktionen der niedermolekularen Chemie, die nicht oder nur sehr schwierig auf Hochpolymere übertragbar sind. So ist beispielsweise die Anlagerung von Salzsäure an Olefine ein technisch durchgeführtes Verfahren (z.B. HCl-Addition an Ethylen), die Anlagerung von Salzsäure an Doppelbindungen in Polymeren hat dagegen aufgrund von Nebenreaktionen wie der Quervernetzung keine Bedeutung erlangt.

Wie aus der Literatur bekannt ist, lösen die für die Herstellung der erfindungsgemäßen Polymeren verwendeten Cokatalysatoren Vernetzungsreaktionen an ungesättigten Polymeren aus. Folglich war damit zu rechnen, daß im erfindungsgemäßen Verfahren während der langen Reaktionszeit nennenswerte Quervernetzung eintritt.

Die für die erfindungsgemäße Reaktion geeigneten Ausgangspolymere entstehen durch Polymerisation von konjugierten Dienen bzw. durch deren Copolymerisation mit Monoolefinen bzw. deren Substitutionsprodukte. Monomere bzw. Comonomere für erfindungsgemäß geeignete Ausgangspolymere sind beispielsweise Butadien, Isopren, Styrol, Acrylnitril, Acrylsäureester, Ethylen, Propylen oder Butylen.

Bevorzugte Polymere sind neben Polybutadien und Polyisopren die alternierenden Copolymere Butadien-Propylen sowie Isopren-Ethylen und die Copolymere Butadien-Acrylnitril und Butadien-Styrol. Die Diene können in 1,2- und/oder 1,4-Verknüpfung polymerisiert sein. Sie können cis- oder trans-substituierte Doppelbindungen aufweisen.

Bevorzugt sind die 1,2-Isomeren. Ganz besonders bevorzugt sind vinylgruppenhaltige Polymere. Die Ausgangspolymeren haben ein Molekulargewicht von 1.500 bis 500,000, vorzugsweise 50.000 bis 350.000. Sie werden entsprechend den bekannten Verfahren hergestellt.

In den erfindungsgemäß eingesetzten Nickel-[O]-Katalysatoren der Formel (I) leiten sich die Reste $OR^1$ in bevorzugter Weise von Phenolen oder Alkylphenolen ab. Der Rest $R^1$ steht dann beispielsweise für Phenyl, 2-Methyl-phenyl, 3-Methyl-phenyl, 4-Methyl-phenyl, Nonyl-phenyl, 2,4-Dimethyl-phenyl, 2,5-Dimethyl-phenyl oder Phenyl-phenyl.

Katalysatoren der Formel (I) können nach dem in Inorg. Synthesis 13 (1972), 105 beschriebenen Verfahren hergestellt werden. Sofern solche Katalysatoren nach der Lehre der US 3.903.120 hergestellt werden, können sie als Rohprodukte zum Einsatz kommen.

Cokatalysatoren der Formel (II) sind im Handel erhältlich oder können, soweit sie Nitrilgruppen enthalten, nach den in Org. Synth. 52 (1972), 90 bzw. in DE-OS 34 30 019 beschriebenen Verfahren, gegebenenfalls in situ vor der Hydrocyanierung, hergestellt werden.

Bevorzugte Cokatalysatoren der Formel (II) sind Ethylaluminiumdichlorid, Diethylaluminiumchlorid, Methylaluminiumdichlorid, Triethylaluminium, Tripropylaluminium, Diethylaluminiumcyanid, Ethylaluminiumdicyanid, Aluminiumtricyanid, Diisopropylaluminiumhydrid; besonders bevorzugt ist Ethylaluminiumdichlorid.

Bezogen auf ein Doppelbindungsäquivalent wird der Katalysator der Formel (I) in Mengen von 0,25 bis 5 Mol-%, bevorzugt 0,5 bis 2 Mol-%, eingesetzt. Der Katalysator der Formel (I) und der Cokatalysator der Formel (II) werden im allgemeinen nahezu im molaren Verhältnis, beispielsweise im Verhältnis 0,95 - 1,1:1, eingesetzt.

Ein Überschuß an Katalysator der Formel (I) bringt keinen deutlichen Vorteil, ist jedoch auch nicht schädlich. Ein deutlicher Überschuß an Cokatalysator der Formel (II) verringert dagegen die erreichbare Anzahl der katalytischen Cyclen, bezogen auf Katalysator (I). Dieser Effekt kann zu einem gewissen Grade durch einen entsprechenden Überschuß des Liganden der Formel (III) kompensiert werden, wobei $R^1$ nicht unbedingt identisch mit $R^1$ im Katalysator (I) sein muß. Diese Kompensation des geschilderten ungünstigen Einflusses beeinträchtigt die Aufarbeitung von Hydrocyanisierungsansätzen, so daß ein Arbeiten mit überstöchiometrischen Mengen an (II) und gegebenenfalls an Liganden (III) weniger bevorzugt ist.

Inerte Lösungsmittel sind beispielsweise aromatische und aliphatische Kohlenwasserstoffe, aromatische Halogenkohlenwasserstoffe, Ether, Nitrile und andere polare oder nicht polare organische Flüssigkeiten ohne bewegliche H-Atome, wie Benzol, Toluol, Xylol, Chlorbenzol, Dichlorbenzol, Tetrahydrofuran, Dioxan, Glykol- bzw. Diglykolether, wie Diglyme, Acetonitril oder deren Mischungen. Da sich im Verlaufe der Hydrocyanierung die Polarität und damit die Löslichkeit des Polymeren ändern, kann es bei ursprünglicher Verwendung eines unpolaren oder schwächer polaren inerten Lösungsmittels sinnvoll sein, während der Reaktion ein stärker polares Lösungsmittel, beispielsweise Acetonitril, Dioxan oder Glykol - bzw. Diglykolether, wie Diglyme, bevorzugt Acetonitril, zuzugeben, um eine im wesentlichen homogene Reaktionslösung aufrecht zu erhalten.

Das Polymer wird in einem Konzentrationsbereich von 1 bis 10 Gew.-%, bezogen auf die Gesamtmenge der Polymerlösung, umgesetzt. Im Sinne einer hohen Raum-Zeit-Ausbeute werden bevorzugt möglichst konzentrierte Lösungen innerhalb des genannten Bereiches eingesetzt; bei Polymeren mit sehr hohem Molekulargewicht wird man zugunsten einer geringeren Viskosität der Lösung im unteren Konzentrationsbereich arbeiten.

Der Cyanwasserstoff kann dem Umsetzungsgemisch in verschiedener Weise zugeführt werden, beispielsweise flüssig in Substanz, gelöst in einem Lösungsmittel, wie etwa Acetonitril, oder mit Hilfe eines Trägergasstromes, beispielsweise mit Hilfe von Stickstoff oder Argon. Der Cyanwasserstoff wird im allgemeinen im Maße seines Verbrauchs zugeführt; eine raschere Zuführung kann die Aktivität des Katalysators beeinträchtigen. Belastungen von 100 bis 300 mMol HCN/mMol (I) pro Stunde bei 60 °C sind beispielsweise möglich.

Die erfindungsgemäße Hydrocyanierung wird bei einer Temperatur von 35 bis 100 °C, bevorzugt 45 bis 90 °C, besonders bevorzugt bei 55 bis 80 °C durchgeführt.

Die erfindungsgemäße Hydrocyanierung wird bevorzugt bei Normaldruck durchgeführt. Sie kann aber auch bei leichtem Unterdruck, beispielsweise bis herab zu 0,5 bar oder bei leichtem Überdruck, beispielsweise bis zu 2 bar, durchgeführt werden, ohne daß sich dadurch Vorteile oder Nachteile ergeben. Selbstverständlich ist es dem Fachmann geläufig, optimale Versuchsbedingungen bezüglich der Temperatur, der Katalysatormenge und der Cyanwasserstoff-Belastung in Vorversuchen zu ermitteln.

## Beispiel

1,36 g (1,05 mMol) $Ni[P(OPh)_3]_4$ wurden zu einer Lösung von 6 g 1,2-Polybutadien (Vinyldoppelbindungen: 91 %; Viskositätszahl $[\eta]$ = 2,0 dl/g in Toluol bei 80 °C) mit 111 mMol Doppelbindungsäquivalenten in 75 ml Chlorbenzol und 42 ml Acetonitril gegeben. Unter Rühren wurden langsam 1,05 mMol $AlEtCl_2$ als 1 molare Lösung in Toluol zugetropft. Anschließend wurden in 4 Stunden bei 50 °C 4,25 g (157 mMol) Blausäure mit einem Stickstoffstrom aufgeleitet.

Da der abgehende Stickstoffstrom nicht über einen Kühler geleitet wurde, mußte das teilweise verdampfte Lösungsmittelgemisch ersetzt werden; hierzu - und auch um die Viskosität nicht zu stark ansteigen zu lassen - wurden während der Reaktion 45 ml Acetonitril zugegeben. Durch den steigenden Acetonitrilgehalt der Lösung konnte eine homogene Lösung aufrecht erhalten werden. Anschließend ließ man das Lösungsmittelgemisch abdampfen und fällte den Rückstand über DMF/Methanol 2 x.

Die Stickstoffbestimmung (7,7 % N) zeigte einen Hydrocyanierungsgrad von 45 % des theoretisch möglichen Umfangs. IR-spektroskopisch konnten die Nitrilgruppen nachgewiesen werden.

## Ansprüche

1. Nitrilgruppenhaltige Polymere, herstellbar durch Umsetzung von Polymeren mit isolierten, nicht aktivierten Doppelbindungen mit Cyanwasserstoff in Gegenwart von Katalysatoren der Formel

$Ni[P(OR^1)_3]_n$,

in der
$R^1$ für Alkyl oder Aryl steht und
n die Zahl 3 oder 4 bedeutet,
und in Gegenwart von Cokatalysatoren der Formel

$AlR^2_{3-m}Hal_m$,

in der
$R^2$ für Wasserstoff, Alkyl oder Cyano steht,
Hal für Chlor, Brom oder Cyano steht und
m die Zahl 0, 1, 2 oder 3 bedeutet,
und gegebenenfalls in Gegenwart eines Phosphits der Formel

$P(OR^1)_3$,

in der $R^1$ die angegebene Bedeutung hat,
in inerten organischen Lösungsmitteln bei 35 bis 100 °C und gegebenenfalls Hydrierung der nicht mit Cyanwasserstoff umgesetzten Doppelbindungen.

2. Polymere nach Anspruch 1, herstellbar aus Diolefin-Polymerisaten von $C_4$-$C_5$-Diolefinen.

3. Polymere nach Anspruch 2, herstellbar aus Polymeren mit Vinylseitenketten.

4. Polymere nach Anspruch 3, gekennzeichnet durch in der Seitenkette befindliche Nitrilgruppen.

5. Polymere nach Anspruch 2, herstellbar aus Polybutadien.

6. Polymere nach Anspruch 5, herstellbar aus 1,2-Polybutadien.

7. Polymere nach Anspruch 1, herstellbar aus Polymeren mit isolierten, nicht aktivierten Doppelbindungen und einem Molekulargewicht von 1.500 bis 500.000.

8. Verfahren zur Herstellung von nitrilgruppenhaltigen Polymeren, dadurch gekennzeichnet, daß man Polymere mit isolierten, nicht aktivierten Doppelbindungen mit Cyanwasserstoff in Gegenwart von Katalysatoren der Formel

$Ni[P(OR^1)_3]_n$,

in der
$R^1$ für Alkyl oder Aryl steht und
n die Zahl 3 oder 4 bedeutet,
und in Gegenwart von Cokatalysatoren der Formel

$AlR^2_{3-m}Hal_m$,

in der
$R^2$ für Wasserstoff, Alkyl oder Cyano steht,
Hal für Chlor, Brom oder Cyano steht und
m die Zahl 0, 1, 2 oder 3 bedeutet,
und gegebenenfalls in Gegenwart eines Phosphits der Formel

$P(OR^1)_3$,

in der $R^1$ die angegebene Bedeutung hat,
in inerten organischen Lösungsmitteln bei 35 bis 100 °C umsetzt und gegebenenfalls die nicht mit Cyanwasserstoff umgesetzten Doppelbindungen hydriert.

9. Verfahren nach Anspruch 8, dadurch gekennzeichnet, daß der Katalysator in einer Menge von 0,25 bis 5 Mol-%, bezogen auf ein Doppelbindungsäquivalent, eingesetzt wird.

10. Verfahren nach Anspruch 8, dadurch gekennzeichnet, daß Katalysator und Cokatalysator im molaren Verhältnis von 0,95 bis 1,1:1 eingesetzt werden.